(19) Europäisches Patentamt

European Patent Office

Office européen des brevets

(11) **EP 0 711 630 B1**

(12) **EUROPEAN PATENT SPECIFICATION**

(45) Date of publication and mention
of the grant of the patent:
**04.10.2001 Bulletin 2001/40**

(51) Int Cl.7: **B23P 15/06**, F16J 9/06

(21) Application number: **95117095.0**

(22) Date of filing: **30.10.1995**

(54) **Method of manufacturing a flat steel wire for side rails of oil ring in internal combustion engine**

Verfahren zur Herstellung eines Flachstahldraht für Seitenleisten eines Ölrings zur Verwendung in einem Verbrennungsmotor

Méthode de fabrication d'un fil d'acier plat pour lamelles latérales d'un segment racleur d'huile d'un moteur à combustion interne

(84) Designated Contracting States:
**AT DE GB**

(30) Priority: **10.11.1994 JP 27617594**

(43) Date of publication of application:
**15.05.1996 Bulletin 1996/20**

(73) Proprietor: **HITACHI METALS, LTD.
Chiyoda-ku, Tokyo (JP)**

(72) Inventors:
• **Masugata, Yoshiki
Yonago-shi (JP)**
• **Kashiwagi, Iwao
Yasugi-shi (JP)**

(74) Representative: **Strehl Schübel-Hopf & Partner
Maximilianstrasse 54
80538 München (DE)**

(56) References cited:
**EP-A- 0 486 320          EP-A- 0 533 128
EP-A- 0 594 042          FR-A- 2 180 986
US-A- 3 681 962**

• **PATENT ABSTRACTS OF JAPAN vol. 6 no. 94
(C-105) ,2 June 1982 & JP-A-57 026123
(TOYODA)**

**Description**

BACKGROUND OF THE INVENTION

The present invention relates to a flat steel wire for side rails of a three-piece, type oil ring made of steel used in various internal combustion engines and a manufacturing method of the flat steel wire.

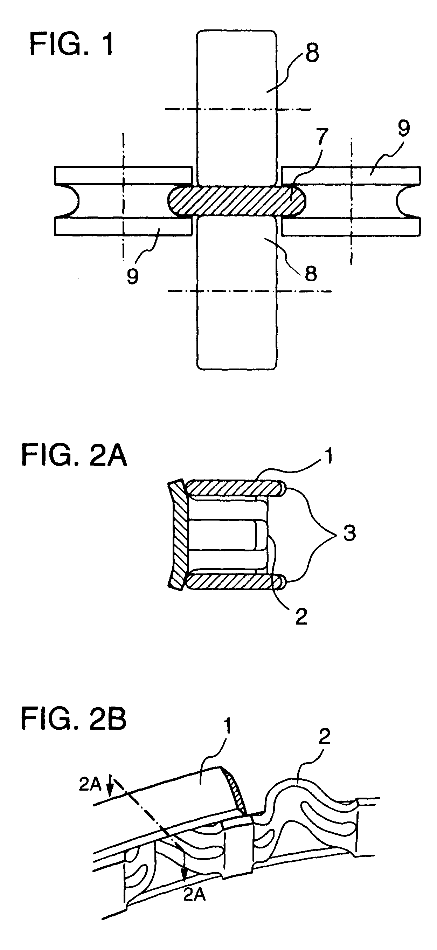

Oil rings of steel for use in internal combustion engines are classified into following two types: a three-piece type and a two-piece type. The three-piece type oil ring is employed mainly in diesel engines, but also occasionally in gasoline engines. As shown in a sectional and perspective view of Figs. 2A and 2B, it comprises total three pieces, i. e., two C-shaped rings called side rails 1 and a single spring called a spacer expander 2, the side rail being formed from a steel wire 7 having round side ends and a cross-section of flat shape by bending it parallel to the primary broad surfaces such that the opposite side ends or side end surfaces locate at the inner and outer sides radially. The two-piece type oil ring comprises total two pieces, i.e., a single grooved ring having shaped-section and a single spring. The present invention relates to the former type oil ring.

Those oil rings serve to provide lubricant oil with an appropriate film thickness to compression rings, and also to scrape surplus oil remaining on the engine cylinder wall to prevent the oil from entering into the combustion chamber.

The flat steel wire for the side rail has been generally manufactured as follows. First, a steel wire rope made of appropriate material is formed by drawing to have a predetermined diameter, and the wire is squeezed by passing through between a pair of horizontal rolls opposed to each other. The squeezed wire is further rolled through a horizontal roll stand for reducing it from the opposite primary surfaces thereof, a vertical roll stand having a pair of caliber vertical edger rolls for reducing it from the round side ends of the wire, the two roll stands being arranged in tandem optionally interposing with an intermediate annealing means therebetween, and a final roll stand for reducing the wire from the opposite primary surfaces thereof. In other words, according to such conventional method, the wire is rolled under a condition that the round and/or the opposite primary surfaces thereof are left free in not only the final roll stand but also the other roll stands. JP-A-01035 173 teaches the manufacturing of a piston ring, wherein a steel material of a particular composition is rolled using rolling rolls, each having a horizontal axis and edger rolls, each having a vertical axis. By drawing and rolling the steel material in a particular temperature range, defects like surface-cracks are eliminated.

The rolled wire is generally subjected to a continuous heat-treatment of quenching and tempering, followed by curling and shearing into the C-shaped ring. After that, surface treatment (such as chromium plating or nitriding) is applied to the outer peripheral surface (or the outer side end surface). Finally, the opposite primary surfaces are ground to obtain a finished product.

When grinding the outer peripheral surface of the wire, a conventional flat steel wire has a large variation (i. e., a large difference between maximum width and minimum width) in wire width which is a size between the outer peripheral surface brought into contact with a inner wall of cylinder and the opposite inner surface and, thus, roundness of the outer periphery after curling is bad. Also, machinability of the wire is poor because it has already been heat-treated and, therefore, sufficiently highly accurate contact of the wire with the cylinder inner wall surface can not be achieved unless a process of grinding the outer peripheral surface for a long time is repeated two or more times.

More specifically, a conventional allowable value of the width variation is 0.015 mm for each material coil, and an actual width variation of the materials is in the range of 0.015 to 0.010 mm. If the ring material is ground only once at its outer periphery, the roundness of the outer periphery of each side rail is unsatisfactory resulting in a problem will arise, which is an occurrence of clearances or regions where contact pressure is not sufficient between the inner surface of the cylinder and the side rails. As a result, the most important role of the side rails could not be performed, which is to provide a lubricant oil film having a uniform and appropriate thickness on the inner surface of the cylinder.

In view of the above, with regard to flat steel wires for the side rails, there has recently been a demand for further reducing an allowable value of the width variation from the conventional value. However, there has been no appropriate working methods as described hereafter, and wires having values of the width variation kept sufficiently small could not be obtained.

DISCLOSURE OF THE INVENTION

An object of the present invention relating to a manufacturing method of a flat steel wire is to reduce work load or steps in grinding an outer periphery of a side rail, prevent the occurrence of clearances or regions where contact pressure is not sufficient between the inner surface of a cylinder and the side rail by making a high precision flat steel wire, and to keep the width variation small to ensure formation of a lubricant oil film in uniform and appropriate thickness.

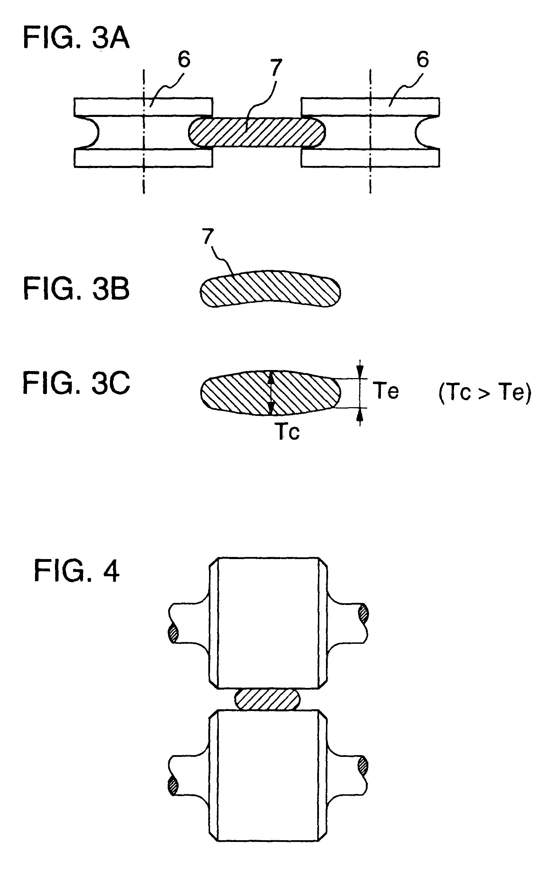

The following is the reason why a flat wire is rolled from the opposite primary surfaces in the final stand in the conventional manufacturing method explained above. Because of the flat wire 7 for side rails having a large ratio of width to thickness, e.g., 4.8, if the flat wire rolled from the widthwise direction in the final stand of edger rolls 6, the flat wire 7 would be buckled (Fig. 3B) during rolling so as to be bent at the center of the width and, hence, it is impossible to keep a high degree of flatness not more than 5 µm required for the opposite primary surfaces of the wire.

On the other hand, Turk's head type roll mill having two horizontal rolls and two vertical rolls has not been used in simultaneously rolling a work from four directions, since a resulting effect is not so good in spite of the complicated apparatus. Further, it seems the reason why a wire-drawing die has not heretofore been employed for the flat wire is that a resulting effect is also not so good.

From test results, the inventors found that any conventional manufacturing method is not appropriate in minimizing the width variation of a flat wire. In this view point, the inventors repeated tests and concluded that buckling and other disadvantages in working of flat wires can be prevented and the width variation can be minimized with an improvement in the conventional manufacturing method.

More specifically, with a view of reducing the width variation of a flat steel wire for side rails, the inventors observed cross-sectional shapes of wire materials rolled by conventional rolling mills using edger rolls.

As a result, it was found that a wire material 7 worked between edger rolls 6, 6 as shown in Fig. 3A is deformed into such a buckled shape as shown in Fig. 3B (often observed in the final edger roll stand), or deformed into such a middle-thickened shape as shown in Fig. 3C (often observed in the intermediate edger roll stand), or deformed into a combined shape of the above two deformations, and that the buckled shape or the like is almost removed by roll-reducing the wire material from the opposite primary surface sides (as shown in Fig. 4), but a deformation caused upon correction of the shape appears mainly as an extension in the widthwise direction and a variation of the widthwise extension is amplified by, e.g., a variation in tension produced between the roll stands. In other words, the inventors found that, according to the conventional method, side end surfaces of the work is left free in the final stand therefore with regard to the area change in cross-section of the work not only caused by vibrations of edger rolls at their outer peripheries during rotating but also caused in the edger roll stand and preserved in the form of a buckled shape or a middle-thickened shape, it is accumulated during rolling of the work from the opposite primary surface sides also due to variation of properties of the work, a tension variation during rolling, etc., resulting in a large width variation.

According to the present invention, there is provided a manufacturing method of a flat steel wire for side rails of an oil ring in an internal combustion engine, wherein a blank steel wire is rolled in a plurality of rolling steps and plastic working process is carried out in a final rolling step by using at least one pair of edge rolls for roll-reducing the wire from opposite side end surfaces, and the ratio of the arcuate contact length between each of the rolls and the wire to the thickness of the wire is set to be no more than 1.8.

The manufacturing method of the present invention according to claim 1 is based on a finding that the width variation of a flat steel wire can be much less than those of conventional products by, in the final stage, working the wire in the state that it is not free at any of side end surfaces and opposite primary surfaces, or roll-reducing the wire from the side end surfaces in the state that it is supported or pressurized at the opposite primary surfaces to prevent the wire to buckle or thicken at the middle region, or working the wire while applying pressure to it from the side end surfaces under the reducing condition, found by the inventors, where buckling or thickening at the middle region is not substantially occurred during roll-working from the opposite primary surfaces.

Therefore, when a flat steel wire is reduced by rolling from side end surfaces according to the method of claim 1, the width variation of the wire can be limited to such a value as essentially caused by rolls themselves and thus minimized. The width variation can considerably be reduced from the conventional value not less than about 10 µm down to a value not more than 8 µm, preferably not more than 6 µm or not more than 4 µm.

Thus, with the manufacturing method of the present invention, it is possible for the first time to manufacture a flat steel wire for side rails having a width variation as small as not more than 8 µm, and to facilitate work for grinding an outer peripheral surface of the side rail.

More specifically, according to claim 2, there is provided a manufacturing method of a flat steel wire for side rails of an oil ring in an internal combustion engine, wherein a width size variation of the wire over a length corresponding to the circumference (approximately 150 to 350 mm) of an oil ring assembly is not more than 8 µm.

BRIEF DESCRIPTION OF THE DRAWINGS

Fig. 1 is a schematic view showing a rolling process in which a wire material is restrained at four faces and Turk's head type rolls are employed.

Fig. 2A is a sectional view of an oil ring assembly taken along the line 2A-2A in Fig. 2B, to which the invention is applied.

Fig. 2B is a perspective view of the oil ring assembly.

Fig. 3A is a sectional view showing a rolling process using edger rolls.

Fig. 3B shows one deformed shape of a flat wire caused by rolling-work using the edger rolls.

Fig. 3C shows another deformed shape of a flat wire caused by rolling-work using the edger rolls.

Fig. 4 is a sectional view showing a rolling process using rolls for reducing a flat wire at its upper and lower surfaces.

DETAILED DESCRIPTION OF THE INVENTION

In the flat steel wire for side rails of an oil ring manufactured according to the invention, since the width variation of the wire over a length corresponding to the circumference of an oil ring assembly is minimized and, therefore, a change of degree of spring back caused by the width variation during curling can be also minimized, roundness of outer peripheries of the side rails in the oil ring assembly is remarkably improved as compared with roundness obtained by using conventional wires, making it possible to reduce the number of grinding steps to be repeated or reduce the working time to a large extent.

The reason why the width variation of the flat steel wire for side rails according to the present invention is restricted to be not more than 8 μm is to show a clear difference from a value of the width variation not less than 10 μm for each coil of conventional flat steel wires for oil ring side rails.

According to the present invention, the width variation can easily be reduced down to a value not more than 6 μm, or further not more than 4 μm as will be seen from Examples described below.

With the drawing process using a wire-drawing die, the work or wire are restrained at opposite primary surfaces and opposite side end surfaces because those surfaces are held in contact with respective wall surfaces of a die hole. Therefore, the wire can be prevented from buckling or thickening at the middle, and variations in dimensions and shape can be reduced to such an extent as being inherent to the wire-drawing itself and practically negligible.

With the following roll-working processes a high degree of surface roughness can be achieved at a high working speed. Further, because simple lubricating means is only required, the working process including post-treatment such as degreasing can be facilitated.

Of those roll-working processes, with the process using Turk's head type rolls in the final stand, since the wire is restrained on the opposite primary surfaces, by way of example, as shown in Fig. 1, the wire 7 can be prevented from buckling or thickening at the middle. In addition, even if an area of cross-section of the wire is varied, those variations are all converted into elongation in the lengthwise direction during roll-working in the final stand and the width variation is held down because the wire is restrained at the opposite primary surfaces and the opposite side ends. With this method, since the work is prevented from buckling or thickening at the middle, it can be reduced at a larger rolling draft than achieved with the method of roll-reducing the work from only the side ends.

The manufacture method according to the present invention is based on finding of the condition for rolling using edger rolls which can prevent the occurrence of buckling of the work or thickening at the middle thereof.

More specifically, according to the present invention it has proved that by setting a ratio of an arcuate contact length between the work and each of the edger rolls to a thickness of the work to be not more than 1.8, buckling of the work or thickening at the middle thereof can greatly be held down. This phenomenon can be understood as being attributable to that as the arcuate contact length is shortened, rolling force is reduced and buckling of the work is prevented correspondingly. Also, it is thought that the rolling force applied to the edge of the work in the restricted arcuate contact portion is dispersed toward the widthwise center divergently in the lengthwise direction of the work. As will be understood, this fact is effective to prevent the work from thickening at the middle. The arcuate contact length L can be reduced by, for example, (1) reducing the rolling draft $\Delta t$ per roll stand by reducing the rolling draft itself from the side ends, or increasing the number of roll stands, or (2) reducing the diameter 2R of each of the edger rolls. The use of this working process enables the rolling mill to be simplified because the rolls for supporting or roll-reducing the work from the opposite primary surfaces to maintain an identical cross-section of the work can be dispensed with.

The shaped-section steel wire for oil ring side rails manufactured in accordance with the present invention has a feature in its shape as described above, and chemical compositions of the steel are not particularly restricted. However, there are chemical compositions which can effectively develop an effect of the featured shape and also improve characteristics of the oil ring. Those chemical compositions will be described below.

Materials for use as the shaped-section steel wire for oil ring side rails are only required to have minimum plastic deformability necessary for working such as rolling and drawing.

At the present, the most popular material usable for that purpose is a martensitic stainless steel containing carbon and Cr in appropriate amounts.

Carbon combines with Cr and additive elements such as Mo, W, V and Nb to form carbides, thereby contributing to an improvement in wear resistance and anti-seizure property, and is also partly dissolved in the matrix to strengthen it.

Therefore, carbon can be added in the range of 0.3 to 1.5 % to the steel suitable for use in the present invention, and further until about 2.8 % to the steel produced by the powder metallurgy method.

On the other hand, Cr is an indispensable component to the oil ring of the present invention because it is combined with carbon to form carbides ($M_{23}C_6$ and $M_7C_3$ types), as mentioned above, for an improvement in wear resistance and anti-seizure property. Also, part of Cr is dissolved in the matrix to improve the strength, oxidation resistance and heat resistance. Further, when the steel is subjected to nitriding treatment, a hard nitrided layer is formed to greatly improve wear resistance and heat resistance. In order to achieve these effects, Cr is added in the range of 3 to 25 %, preferably 10 to 25 %, to the steel suitable for use in the present invention.

As to chemical components in the wire of the present invention, contents of carbon and Cr are most important, but other elements than carbon and Cr can also be added optionally.

Examples of desired steels in combinations of the various elements include a steel comprising, by weight, 0.3 to 1.5 % carbon, not more than 1.5 % Si, not more than 1.5 % Mn, and 3 to 25 % Cr, and a steel comprising the same components as the above steel and optionally containing one ore more of Mo, W, V and Nb in terms of not more than 3 % of "Mo + W/2" and not more than 3 % of "V + Nb/2".

Additionally, other steels which are produced by adding, to any of the steels having the above-cited combinations, not more than 5 % Cu and not more than 12 % Co to improve wear resistance, or 0.5 to 2 % Al to improve nitriding property (e.g., to compensate for low wear resistance of low-Cr steels), or 0.3 to 5 % Ni to improve quenching property, are also useful as materials of the flat steel wire for oil rings manufactured according to the present invention.

Looking at ranges of carbon and Cr as main components, steels suitable for use in the present invention are a low-Cr steel containing 0.3 to 0.8 % carbon and 3 to 7 % Cr, a medium-Cr steel containing 0.3 to 0.8 % carbon and 7 to 15 % Cr, and a high-Cr steel containing 0.5 to 1.5 % carbon and 15 to 25 % Cr.

As typical more practical steels, there can be raised a steel comprising 0.35 % carbon, 0.36 % Si, 0.25 % Mn and 6 % Cr, or containing 0.1 % Al in addition to the above;

a steel comprising 0.5 % carbon, 0.2 % Si, 0.25 % Mn, and 8 % Cr;
a steel comprising 0.65 % carbon, 0.25 % Si, 0.4 % Mn, and 12.5 % Cr;
a steel comprising 0.6 % carbon, 0.4 % Si, 0.3 % Mn, 15 % Cr, 1.5 % "Mo + W/2", and 0.5 % "V + Nb/2";
a steel comprising 0.65 % carbon, 0.35 % Si, 0.35 % Mn, 13.6 % Cr, 0.25 % "Mo + W/2", and 0.07 % "V + Nb/2";
a steel comprising 0.63 % carbon, 0.4 % Si, 0.35 % Mn, 13.5 % Cr, 0.3 % "Mo + W/2", and 0.1 % "V + Nb/2";
a steel comprising 0.83 % carbon, 0.4 % Si, 0.3 % Mn, 17.5 % Cr, 1.1 % "Mo + W/2", 0.1 % V, and optionally not more than 8 % Co;
a steel comprising 0.8 % carbon, 0.4 % Si, 0.4 % Mn, 21.5 % Cr, 1 % "Mo + W/2", 0.25 % "V + Nb/2", not more than 4 % Co, and optionally not more than 2 % Cu;
a steel comprising 0.8 % carbon, 0.35 % Si, 0.5 % Mn, 15 % Cr, 1.2 % "Mo + W/2", 0.2 % "V + Nb/2", and 0.8 % Co; and
a steel comprising 1.3 % carbon, 0.3 % Si, 0.3 % Mn, 23 % Cr, 1.2 % "Mo + W/2", 0.1 % "V + Nb/2", and optionally not more than 6 % Co.

Examples

In any of the following Examples, five kinds of materials listed in Table 2 below were employed.

Example 1:

First, each of materials having predetermined cross-sectional sections was prepared and shaped into a side rail wire of 0.50 mm thickness and 2.35 mm width by using a wire-drawing die. The die was made of sintered diamond and was of so-called track type having the form rounded at opposite edges as with a cross-section of the wire. The approach angle of the die was set to a total angle of 12° to 15° that was used in normal drawing for circular sections. A wet type lubricant was employed in view of the finish texture of the wire. As a result, for the material No. 3, the width variation was held within the range of 2.348 to 2.354 (with dispersion of 0.006 μm) over a total length, and the standard deviation (the number of samples N = 30, this equally applies to the following Examples) was 0.00125 μm. For the other materials No. 1, No. 2, No. 4 and No. 5, the dimensional range was changed depending on thinning or fattening in the drawing process, but the dimensional variations and the standard deviations were almost equal to those for the material No. 3. Problems such as seizure and disconnection were occurred in no way, and the quantity of wire drawing achieved by one die amounted to 10 tons or more. It was thus confirmed that the wire can be mass-produced from an industrial point of view. While zigzag motion and twisting of the wire occurred during drawing, the zigzag motion was overcome by adjusting the pass-line and the twisting was overcome by modifying the approach section of the die hole.

Example 2:

Tests were made by providing a plurality of preliminary shaping stands in tandem and changing a shaping mill downstream of the preliminary shaping stands in various ways. In the preliminary shaping stands, roll stands for squeezing a round wire and reducing the squeezed wire from opposite primary surfaces were made up of driven-to-rotate rolls, whereas edger roll stands for reducing the wire from side ends were made up of non-driven free rolls.

Working schedules and so on are listed in Table 1. More specifically, the working schedules were set up in five types by providing, downstream of the opposite primary surfaces reducing roll stand (corresponding to the column "opposite primary surfaces reducing rolls" in Table 1) for reducing the wire from the opposite primary surfaces as a final stand of the plurality of preliminary shaping roll stands, (1) no working means (N), (2) two stands (A) or three stands (B to E) of Turk's head type rolls, (3) one stand (F), two stands (G, J, K), or three stands (H, I, O, P) of vertical two-axes edger rolls, (4) one stand of Turk's head type rolls and one stand of edger rolls in this sequence (L), or (5) one stand of Turk's head type rolls and one stand of edger rolls in reversed sequence (M). Table 1 shows those roll-reducing schedules and resulting width changes (total reduction and reduction per stand $\Delta t$), a ratio L/t of the arcuate contact length to the work thickness, a width variation, flatness of the opposite primary surfaces, etc.

Of the listed roll-reducing schedules, N corresponds to the conventional process (roll-reducing a work from front and rear surfaces after rolling it by edger rolls), A to E and M correspond to the process carried out using Turk's head type rolls, and F to L, O and P correspond to the process of roll-reducing a work by edger rolls as free rolls in the final roll stand. Of the schedules F to L, O and P, F to L represent the cases corresponding to the present invention, where the ratio L/t of the arcuate contact length to the work thickness is held down to be no more than 1.8, i.e., corresponding to the present invention, while O and P represent comparative examples in which roll-reducing was made with L/t in excess of 1.8.

Incidentally, L/t represents a ratio of the arcuate contact length L of a work to a thickness t = 0.5 mm of the work measured there, and L was determined from the average reduction $\Delta t$ per roll stand for reducing edge surfaces of the work and the roll radius R = 50 mm using a formula of L = $\sqrt{(R\Delta t)}$.

Table 1

| ROLL STAND | No. | ROLL-REDUCING SCHEDULE (WIDTH CHANGES (mm)) | | | | | | | | |
|---|---|---|---|---|---|---|---|---|---|---|
| | | OPPOSITE PRIMARY SURFACES REDUC-ING ROLLS | TURK'S HEAD TYPE ROLLS | | EDGER ROLLS | | | TURK'S HEAD TYPE ROLLS 3 | WIDTHWISE TOTAL REDUCTION | REDUC-TION *$\Delta$t |
| | | | 1 | 2 | 1 | 2 | 3 | | | |
| | A | 2.357 | 2.354 | 2.351 | – | – | – | – | 0.006 | 3 |
| | B | 2.357 | 2.355 | 2.353 | – | – | – | 2.351 | 0.006 | 2 |
| | C | 2.358 | 2.354 | 2.351 | – | – | – | 2.349 | 0.009 | 3 |
| | D | 2.358 | 2.353 | 2.349 | – | – | – | 2.346 | 0.012 | 4 |
| | E | 2.358 | 2.343 | 2.328 | – | – | – | 2.316 | 0.042 | 14 |
| METHOD OF INVEN-TION | F | 2.358 | – | – | 2.350 | – | – | – | 0.008 | 8 |
| | G | 2.357 | – | – | 2.354 | 2.349 | – | – | 0.008 | 4 |
| | H | 2.358 | – | – | 2.355 | 2.352 | 2.350 | – | 0.008 | 3 |
| | I | 2.358 | – | – | 2.346 | 2.330 | 2.315 | – | 0.043 | 14 |
| | J | 2.357 | – | – | 2.346 | 2.331 | – | – | 0.026 | 13 |
| | K | 2.359 | – | – | 2.350 | 2.344 | – | – | 0.015 | 8 |
| | L | 2.358 | 2.354 | – | 2.351 | – | – | – | 0.007 | 4 |
| | M | 2.358 | – | – | 2.354 | – | – | 2.350 | 0.008 | 4 |
| COMPARA-TIVE METHOD | N | 2.350 | – | – | – | – | – | – | – | – |
| | O | 2.358 | – | – | 2.343 | 2.328 | 2.301 | – | 0.057 | 19 |
| | P | 2.359 | – | – | 2.343 | 2.326 | 2.296 | – | 0.063 | 21 |

* PER STAND (UNIT: μm)

– Cont'd –

EP 0 711 630 B1

Table 1 (Cont'd)

| L/t | WIDTH VARIATION (μm) | | FLATNESS OF UPPER AND LOWER SURFACES | REMARKS |
|---|---|---|---|---|
| | RANGE | STANDARD DEVIATION | | |
| (0.775) | 5 | 1.13 | 0 | |
| (0.632) | 2 | 0.70 | 0 | |
| (0.775) | 3 | 0.83 | 0 | |
| (0.894) | 3 | 0.90 | 1 | |
| (1.673) | 8 | 1.30 | 0 | |
| 1.265 | 7 | 1.32 | 1 | |
| 0.894 | 5 | 1.22 | 2 | |
| 0.776 | 2 | 0.68 | 2 | |
| 1.673 | 7 | 1.28 | 4 | |
| 1.612 | 7 | 1.27 | 3 | |
| 1.265 | 6 | 1.31 | 3 | |
| 0.894 | 5 | 1.23 | 1 | |
| (0.894) | 4 | 1.02 | 0 | |
| - | 13 | 4.01 | 0 | |
| 1.949 | 7 | 1.25 | 6 | CROSS-SECTION BENT |
| 2.049 | 7 | 1.28 | 7 | CROSS-SECTION BENT |

As will be seen from Table 1, N corresponding to the conventional method provides good flatness of the opposite primary surfaces being almost equal to 0 μm, but a large width variation of 13 μm. In contrast, the methods (A to M) in which the essentially final plastic working process was carried out by using Turk's head type rolls or edger rolls, provide a width variation not more than 8 μm and good flatness not more than 4 μm. However, according to the methods O, P in which the work was strongly roll-reduced from edge surfaces with L/T exceeding 1.8 while leaving opposite primary surfaces not restrained, flatness of the opposite primary surfaces is as large as 6 μm and 7 μm, respectively, out of the criterion value due to the occurrence of buckling and the width variation is also relatively large, i.e., 7 μm.

It will also be understood that even with L/t set to be not more than 1.8, the method having a relatively large L/T value provides a correspondingly large width variation, and hence that when the total reduction is large, the width variation can be made smaller by increasing the number of edger roll stands to lessen the reduction per stand.

For other materials than No. 3, results substantially identical to those mentioned above were obtained.

Example 3:

Next, after performing prescribed heat treatment on wires A, C, E and N manufactured in Example 2 by using the material No. 3 and the corresponding methods, the inventors coiled and cut the wires into the ring form, and then obtained nitrided rings for side rails by gas-nitriding the cut wires.

The rings were ground at outer peripheral surfaces by a rotating whetstone and set in a cylinder to compare grinding allowances required to completely eliminate clearances between an inner wall of the cylinder and the outer peripheral surfaces of the rings for the respective wires. Compared results are shown in Table 3.

Incidentally, the clearance between the ring outer peripheral surface and the cylinder inner wall was confirmed by setting the ring in the cylinder, irradiating light into the cylinder from one side, and checking the presence or absence of light leaked to the other side.

Table 2

| No. | CHEMICAL COMPOSITION (WEIGHT %) | | | | | | | |
|---|---|---|---|---|---|---|---|---|
| | C | Si | Mn | Cr | Mo | V | OTHERS | Fe |
| 1 | 0.65 | 0.35 | 0.37 | 13.4 | 0.30 | 0.04 | | Bal. |
| 2 | 0.49 | 0.21 | 0.26 | 8.1 | - | - | | " |
| 3 | 0.83 | 0.42 | 0.29 | 17.8 | 1.10 | 0.09 | | " |
| 4 | 0.82 | 0.41 | 0.30 | 17.6 | 1.12 | 0.11 | Co 4.0 | " |
| 5 | 0.78 | 0.39 | 0.32 | 21.1 | 1.00 | 0.24 | Co 3.9, Cu 1.9 | " |

As shown in Table 2, the ring manufactured by using the conventional wire N required a grinding allowance of 22 μm at minimum, and also required the grinding process to be divided into twos, i.e., rough-grinding and finish-grinding processes, from the standpoint of efficiency. On the other hand, for the ring manufactured by using the wire E having a width variation not more than 8 μm, no leaked light was detected at a grinding allowance of 13 μm approximately half of the conventional value, and the grinding time was cut down about 30 %.

For the ring manufactured by using the wire A having a width variation not more than 5 μm, roughing grinding could be dispensed with and the grinding allowance was reduced to 7 μm approximately one third of the conventional value. For the ring manufactured by using the wire C having further improved dimensional accuracy (width variation not more than 3 μm), an outer peripheral surface of the ring having such accuracy as causing no clearances could be achieved by grinding away the outer peripheral surface just 5 μm with lapping alone.

By applying a space expander to the ring finished to the condition where no clearances occur, substantially uniform contact pressure is achieved.

Thus, the accuracy of width variations of wires apparent affects the number of steps required for grinding the ring outer periphery, and a significant effect of the wire according to the present invention as compared with the conventional wire is confirmed by lessening the width variation to be not more than 8 μm. If the width variation is reduced to be not more than 5 μm, the rough-grinding process can be dispensed with. Further, the lapping allowance can also be reduced by lessening the width variation to be not more than 3 μm.

Table 3

| SAMPLE WIRE No. | GRINDING ALLOWANCE REQUIRED (μm) | | |
|---|---|---|---|
| | ROUGH-GRINDING ALLOWANCE | LAPPING ALLOWANCE | TOTAL |
| A | - | 7 | 7 |
| C | - | 5 | 5 |
| E | 7 | 6 | 13 |
| N | 16 | 6 | 22 |

As described hereinabove, the ring for use as a side rail manufactured by using the wire of the present invention has a minimized width variation and enables the number of grinding steps to be much cut down in comparison with the ring manufactured by using the conventional wire. Consequently, side rails for an oil ring can be mass-produced with the lowered cost and high yield.

**Claims**

1. A manufacturing method of a flat steel wire (7) for side rails (1) of an oil ring in an internal combustion engine, wherein a blank steel wire is rolled in a plurality of rolling steps and a plastic working process is carried out in a final rolling step by using one pair of edger rolls (6) for roll-reducing said wire from opposite side end surfaces,
   **characterised in that**
   in said final rolling step at least one pair of said rolls (6) is used and the ratio of the arcuate contact length (L) between each of said rolls (6) and said wire (7) to the thickness (t) of said wire (7) is set to be no more than 1.8.

2. A manufacturing method according to claim 1, wherein said final rolling step is carried out such that the width size variation of said wire (7) over a length corresponding to the circumference of an oil ring assembly is no more than 8 $\mu$m, said length being within a range of 150 to 350 mm.

3. A manufacturing method according to claim 1 or 2, wherein said steel wire to be processed in said final rolling step is provided with a flat shape in its cross-section which has round side ends.

**Patentansprüche**

1. Verfahren zur Herstellung eines flachen Stahldrahts (7) für die Seitenleisten (1) eines Ölrings zur Verwendung in einem Verbrennungsmotor, wobei ein vorgefertigter Stahldraht in mehreren Walzschritten gewalzt wird, und in einem letzten Walzschritt ein plastischer Verformungsprozeß ausgeführt wird, bei dem ein Paar von Kantenrollen (6) an den gegenüberliegenden Seitenendflächen des Drahtes (7) zum Auswalzen eingesetzt wird,
   **dadurch gekennzeichnet, daß**
   in dem letzten Walzschritt mindestens ein Paar der Rollen (6) verwendet wird, und das Verhältnis der Bogenkontaktlänge (L) zwischen jeder der Rollen (6) und dem Draht (7) zur Dicke (t) des Drahtes (7) nicht mehr als 1,8 beträgt.

2. Herstellungsverfahren nach Anspruch 1, wobei der letzte Walzschritt so ausgeführt wird, daß die Größenabweichungen in der Breite des Drahtes (7) über eine dem Umfang einer Ölringbaugruppe entsprechenden Länge nicht mehr als 8 $\mu$m betragen, wobei die Länge zwischen 150 bis 350 mm liegt.

3. Herstellungsverfahren nach Anspruch 1 oder 2, wobei der in dem letzten Walzschritt zu verarbeitende Stahldraht eine flache Querschnittsform mit runden Seitenenden aufweist.

**Revendications**

1. Méthode de fabrication d'un fil d'acier plat (7) pour lamelles latérales (1) d'un segment racleur d'huile dans un moteur à combustion interne, dans laquelle une ébauche de fil d'acier est laminée dans une pluralité d'étapes de laminage et un procédé d'usinage plastique est exécuté dans une étape de laminage final en utilisant une paire de cylindres à refouler (6) pour réduire au cylindre ledit fil d'acier depuis des surfaces d'extrémité latérale opposées,
   **caractérisée en ce que** dans ladite étape de laminage final, au moins une paire desdits cylindres (6) est utilisée et le rapport de la longueur de contact en arc (L) entre chacun desdits cylindres (6) et ledit fil d'acier (7) à l'épaisseur (t) dudit fil d'acier (7) est fixé pour ne pas être supérieur à 1,8.

2. Méthode de fabrication selon la revendication 1, dans laquelle ladite étape de laminage final est exécutée de telle sorte que la variation de largeur dudit fil d'acier (7) sur une longueur correspondant à la circonférence d'un dispositif de segment racleur d'huile n'est pas supérieure à 8 $\mu$m, ladite longueur étant comprise dans un intervalle de 150 à 350 mm.

3. Méthode de fabrication selon la revendication 1 ou 2, dans laquelle ledit fil d'acier qui doit être traité dans ladite étape de laminage final est pourvu d'une forme plate, dans sa section transversale, qui possède des extrémités latérales arrondies.

FIG. 1

FIG. 2A

FIG. 2B

FIG. 3A

6　　　　7　　　　6

FIG. 3B

7

FIG. 3C

Te　　$(Tc > Te)$

Tc

FIG. 4